# EUROPEAN PATENT SPECIFICATION

(11) **EP 4 463 837 B1**
(45) Date of publication and mention of the grant of the patent: **03.06.2026**
(21) Application number: 23700227.4
(22) Date of filing: 12.01.2023
(51) Int. Cl.: G06V 20/69

(54) **METHOD AND SYSTEM FOR CONSTRUCTING A DIGITAL IMAGE DEPICTING AN ARTIFICIALLY STAINED SAMPLE**
VERFAHREN UND SYSTEM ZUR ERSTELLUNG EINES DIGITALEN BILDES MIT EINER KÜNSTLICH GEFÄRBTEN PROBE
PROCÉDÉ ET SYSTÈME DE CONSTRUCTION D'UNE IMAGE NUMÉRIQUE REPRÉSENTANT UN ÉCHANTILLON COLORÉ ARTIFICIELLEMENT

(30) Priority: 12.01.2022 EP 22151198
(43) Date of publication of application: 20.11.2024
(73) Proprietor: CellaVision AB, 223 62 Lund (SE)
(72) Inventor: ALMERS, Martin, 226 51 LUND (SE); HEDLUND, Sven, 226 57 LUND (SE); JÖNSSON, Jesper, 224 80 LUND (SE)
(74) Representative: AWA Sweden AB
(86) International application number: PCT/EP2023/050636
(87) International publication number: WO 2023/135204

(56) References cited:
- WO-A1-2015/179452
- WO-A1-2021/198247
- US-A1- 2019 188 446
- ZACHARY F. PHILLIPS ET AL: "Multi-Contrast Imaging and Digital Refocusing on a Mobile Microscope with a Domed LED Array", PLOS ONE, vol. 10, no. 5, 13 May 2015 (2015-05-13), pages e0124938, XP055750420, DOI: 10.1371/journal.pone.0124938
- THANH NGUYEN ET AL: "Deep learning approach to Fourier ptychographic microscopy", ARXIV.ORG, CORNELL UNIVERSITY LIBRARY, 201 OLIN LIBRARY CORNELL UNIVERSITY ITHACA, NY 14853, 31 July 2018 (2018-07-31), XP081800926, DOI: 10.1364/OE.26.026470

## Description

### Technical field

The present inventive concept relates to a method and a device for training a machine learning model to construct a digital image depicting an artificially stained sample. The present inventive concept further relates to a method and a microscope system for constructing a digital image depicting an artificially stained sample.

### Background of the invention

In the field of digital microscopy, a typical task is to find and identify objects within a sample. For instance, within hematology and cytology, specific cell types may be found and identified in order to establish a diagnose for the patient from which the sample is taken.

US 2019/188446 A1 discloses methods for generating virtually stained images of unstained samples by means of an artificial neural network that is trained with pairs of images.

WO 2021/198247 A1 discloses a method for virtually staining a tissue sample and a device for tissue analysis. It uses different lighting modalities and then a machine learning model to process and virtually staining the images.

Samples are typically stained which increases the contrast within the sample, which allows objects within the sample to be detected. For example, white blood cells are more or less transparent, and are therefore difficult to identify using a microscope without staining the sample. However, chemical agents used for staining may be toxic, and therefore requires laboratory personnel to follow safety procedures (e.g., using protective equipment and/or fume hoods) to avoid exposure to such chemicals. The staining process is also a complex process and may therefore increase the time needed for analysis. Due to its complexity, it can often be difficult to ensure a consistent result of the staining process. For example, depending on the quality of the used chemical agents, the resulting color of the sample may vary as well as the degree of staining. In addition, due to the chemicals needed, the safety procedures, and the extra time needed, staining samples prior to analysis may increase the economic costs associated with the analysis.

It is also typically beneficial to quickly screen a sample for specific types of cells. During such screenings, there is a compromise between speed and precision. High precision of the screening typically requires a large magnification of the sample, which allows cells to be imaged and analyzed. Hence, only a small portion of the sample is imaged at a time, and a large number of individual positions of the samples must be therefore be imaged in order to screen the entire sample which leads to a time-consuming screening process. Thus, in order to reduce the time needed for screening, the number of imaged positions could be reduced. However, given that the entire sample is to be screened, this requires that the magnification is reduced, which, on the other hand, reduces the precision in the screening, leading to a screening process that may not properly find and identify cell types.

Hence, there is a need for improvements within the art.

### Summary of the invention

It is an object to, at least partly, mitigate, alleviate, or eliminate one or more of the above-identified deficiencies in the art and disadvantages singly or in any combination and solve at least the above-mentioned problem.

According to a first aspect a method for training a machine learning model to construct a digital image depicting an artificially stained sample is provided according to claim 1.

The method of the first aspect comprising: receiving a training set of digital images of an unstained sample, wherein the training set of digital images is acquired by illuminating the unstained sample from a plurality of directions and capturing a digital image for each of the plurality of directions; receiving a ground truth comprising a digital image of a stained sample, wherein the stained sample is formed by applying a staining agent to the unstained sample; and training the machine learning model to construct a digital image depicting an artificially stained sample using the received training set of digital images of the unstained sample and the received ground truth.

Within the context of this disclosure, the wording "digital image depicting an artificially stained sample" should be construed as a computer-generated digital image of the unstained sample. This digital image may be similar, or even identical, to a digital image of the stained sample. Therefore, the depicted artificially stained sample may have a contrast similar to a depicted stained sample (which have actually been stained by a staining agent). Put differently, the depicted artificially stained sample may replicate a sample actually being stained by the staining agent.

Within the context of this disclosure, the wording "unstained sample" should be construed as a sample without applied staining agent. The unstained sample may have a relatively lower contrast compared to a stained sample. The contrast of the unstained sample may be low such that it may be difficult, or even impossible, to discern features of the unstained sample using conventional microscopy in a digital image of the unstained sample.

Within the context of this disclosure, the wording "ground truth" should be construed as information that is known to be real and/or true. Hence, in this context, since the machine learning model is trained to construct a digital image depicting an artificially stained sample, the ground truth may represent a stained sample. The ground truth may in this context therefore comprise a digital image of a stained sample. The ground truth may comprise a digital color image of a stained sample. Put differently, the digital image of the ground truth may depict a stained sample in color.

Within the context of this disclosure, the wording "staining agent" should be construed as one or more chemical agents that may be used to increase a contrast of a sample (e.g., by changing the color). The staining agent may be chosen depending on the type of sample and/or what type of objects within the sample is of interest. For example, within hematology, samples (e.g., blood smears) are typically stained by using May Grünewald-Giemsa (MGG), Wright-Giemsa (WG), or Wright. As a further example, within pathology, samples are typically stained by using Hematoxylin-eosin (H&E). Different staining agents may increase the contrast for different objects and/or substances within a sample. For example, some staining agents may be adapted increase the contrast of proteins, etc. Hence, which staining agent to be used may be chosen depending on the sample and/or on the type of objects of interest in the sample.

Hence, the machine learning model is trained to correlate the training set of digital images of the unstained sample to the ground truth (e.g., the digital image of the stained sample). The machine learning model may be trained iteratively and/or recursively until a difference between an output of the machine learning model (i.e., the digital image depicting the artificially stained sample) and the ground truth (e.g., the digital image of the stained sample) is smaller than a predetermined threshold. A smaller difference between the output of the machine learning model and the ground truth may indicate a higher accuracy of the constructed digital image depicting the artificially stained sample provided by the machine learning model. Put differently, a smaller difference between the output of the machine learning model and the ground truth may indicate that the constructed digital image depicting an artificially stained sample may to a higher degree replicate a digital image of the stained sample. Hence, preferably, the difference between the output of the machine learning model and the ground truth may be minimized. The machine learning model may be trained to construct digital images of artificially stained samples for a plurality of different sample types. In such case, the machine learning model may, for each sample type, be trained using a training set of digital images of a sample of the sample type, and a corresponding ground truth associated with the respective sample type.

By illuminating the sample from a plurality of different directions and capturing a digital image for each of the plurality of directions, information regarding finer details of the unstained sample may be captured than what normally is resolvable by a conventional microscope (i.e., using a conventional microscope illumination) used to image the unstained sample. This can be understood as different portions of Fourier space (i.e., the spatial frequency domain) associated with the unstained sample are imaged for different illumination directions. This technique may be known in the art as Fourier Ptychography. Further, by illuminating the unstained sample from a plurality of different directions and capturing a digital image for each of the plurality of directions, information regarding a refractive index associated with the unstained sample may be captured. This can be understood as an effect of refraction of light being dependent on an angle of incident for light illuminating the unstained sample and the refractive index of the unstained sample. Information regarding the refractive index of the unstained sample may, in turn, allow phase information (typically referred to as quantitative phase within the art) associated with the unstained sample to be determined. Since the plurality of digital images comprises information associated with one or more of fine details of the unstained sample, a refractive index associated with the unstained sample, and phase information associated with the unstained sample, this information may be used in the training of the machine learning model, which may, in turn, allow for a machine learning model being trained to more accurately construct the digital image depicting the artificially stained sample than what would be allowed in case the plurality of digital images were captured from only one direction or by using conventional microscopy. Using conventional microscopy (e.g., by illuminating the unstained sample from a majority of the plurality of directions up to a numerical aperture of the microscope objective used to image the unstained sample), it may be difficult, or even impossible, to capture information associated with the refractive index associated with the unstained sample and/or phase information associated with the unstained sample. Illuminating the unstained sample from a plurality of different directions may further allow for capturing information relating to details of the unstained sample which are finer than what normally is allowed by a microscope objective used to image the unstained sample. Thus, a microscope objective having a relatively lower magnification may be used while still being able to capture information related to fine details of the unstained sample. Using a relatively lower magnification microscope objective may, in turn, allow for larger portions of the unstained sample to be imaged at each imaging position. Hence, the entire unstained sample may be scanned by imaging at relatively fewer positions which, in turn, may allow for a faster scanning of the unstained sample.

Hence, the present inventive concept allows for training a machine learning model to construct a digital image replicating a stained sample using a plurality of digital images of an unstained sample. Hence, by using the trained machine learning model, a digital image depicting a stained sample (i.e., the artificially stained sample) may be constructed without having to apply a staining agent to the unstained sample.

The method of the first aspect may further comprise: acquiring the training set of digital images of the unstained sample by: illuminating the unstained sample from a plurality of directions, and capturing, for each direction of the plurality of directions, a digital image of the unstained sample.

The training set of digital images may be acquired by illuminating the unstained sample with white light from the plurality of directions and capturing a digital image for each of the plurality of directions.

Within the context of this disclosure, the wording "white light" should be construed as light having a relatively broad spectrum of wavelengths. White light may, e.g., resemble sunlight. The spectrum of white light may comprise a majority of the visible light spectrum, as opposed to light having a narrow spectrum (e.g., monochromatic light).

An associated advantage is that white light (i.e. broad-spectrum light) may allow for more information about the sample to be captured in the training set of digital images, which otherwise would be missed in parts of the spectrum not covered when using narrowband light sources. In turn, that information may be used by the trained machine learning model when constructing a digital image depicting an artificially stained sample which to an even higher degree may resemble a digital image of a stained sample. Monochromatic light is typically required in imaging applications utilizing Fourier ptychography, and several different colors of monochromatic light may therefore be needed in prior art systems to capture multispectral information about the sample. Thus, using white light may reduce a total number of digital images needed to capture multispectral information about the sample compared to prior art systems utilizing Fourier ptychography. Further, using different colors of monochromatic light may only allow information about the sample for those specific wavelength ranges to be captured, and since white light may have a broader spectrum, using white light may allow for capturing information about the sample for a broader wavelength range compared to when using monochromatic light.

The training set of digital images may be acquired using a microscope objective and an image sensor, and wherein at least one direction of the plurality of directions may correspond to an angle larger than a numerical aperture of the microscope objective.

The numerical aperture of the microscope objective may be a dimensionless number associated with a range of angles over which the microscope objective accepts light. Hence, a direction larger than the numerical aperture may be understood as a direction corresponding to an angle larger than the range of angles over which the microscope objective accepts light.

By illuminating the sample from an angle larger than the numerical aperture of a microscope objective, the digital image captured for that angle of illumination may comprise information about higher spatial frequencies, and thereby finer details of the unstained sample than the microscope objective normally allows. This may, in turn, allow for the microscope objective to capture phase information associated with the unstained sample and information relating to details not normally being resolvable by the microscope objective, which may be used in the training of the machine learning model. Put differently, by illuminating the unstained sample from an angle larger than the numerical aperture of the microscope objective may allow for an improved training the machine learning model to construct a digital image depicting the artificially stained sample.

The method of the first aspect may further comprise: applying a staining agent to the unstained sample, thereby forming a stained sample; and forming the ground truth comprising the digital image of the stained sample by: acquiring a digital image of the stained sample. Put differently, the stained sample and the unstained sample may be the same sample with a difference being the applied staining agent.

An associated advantage is that features (e.g., objects) in the stained sample may be paired with corresponding features in the unstained sample, whereby an improved training of the machine learning model to construct the digital image depicting the artificially stained sample may be allowed.

The act of acquiring the digital image of the stained sample may comprise: illuminating the stained sample simultaneously from a subset of the plurality of directions; and capturing the digital image of the stained sample while the stained sample is illuminated simultaneously from the subset of the plurality of directions.

Within the context of this disclosure, the wording "subset of the plurality of directions" should be construed as more than one direction of the plurality of directions. Which of the directions, and the number of directions, of the subset may be chosen such that illumination of the stained sample is similar to conventional microscopy illumination (e.g., brightfield illumination). Hence, the digital image of the stained sample may be similar to a digital image captured by a conventional microscope system. The subset of directions may, e.g., be a majority of, or all, directions of the plurality of directions.

An associated advantage is that the same microscope system, and in particular the same illumination system, may be used to capture the training set of digital images of the unstained sample and the digital image of the stained sample. This may, in turn, allow for a more efficient handling of the unstained sample during collection of the digital images used for training. For example, the unstained sample may, after the training set of digital images has been captured, remain stationary and be stained in the microscope system. Thus, an improved pairing between features in the stained sample with corresponding features in the unstained sample may be allowed. Using the same illumination system may further reduce economic costs associated with collecting the digital images needed for training the machine learning model.

The method of the first aspect may further comprise: receiving a reconstruction set of digital images of the stained sample, wherein the reconstruction set may be acquired by illuminating the stained sample from a plurality of directions and capturing a digital image for each of the plurality of directions; and reconstructing, using a computational imaging technique and the received reconstruction set of digital images, the digital image of the stained sample.

Within the context of this disclosure, the wording "computational imaging technique" should be construed as a computational process which can form a digital image by combining information of several digital images captured during various conditions (e.g., different illumination conditions). Examples of computational imaging technique that may be suitable in this context are Fourier ptychography and machine learning. The computational imaging technique may be a reconstruction machine learning model trained to reconstruct a digital image of the stained sample. The reconstructed digital image of the stained sample may have a resolution similar to resolutions of the digital images of the reconstruction set. The reconstructed digital image of the stained sample may have a resolution relatively higher than the resolutions of one or more of the digital images of the reconstruction set. Reconstruction of a digital image having a relatively higher resolution than the resolutions of the digital images of the reconstruction set may be allowed since the reconstruction set is acquired by illuminating the stained sample from a plurality of directions and capturing a digital image for each of the plurality of directions.

The method of the first aspect may further comprise: applying the staining agent to the unstained sample, thereby forming the stained sample; and acquiring the reconstruction set of digital images of the stained sample by: illuminating the stained sample from a plurality of directions, and capturing, for each direction of the plurality of directions, a digital image of the stained sample.

The reconstruction set of digital images may be acquired using a microscope objective and an image sensor, and wherein at least one direction of the plurality of directions may correspond to an angle larger than a numerical aperture of the microscope objective.

By illuminating the stained sample from an angle larger than the numerical aperture of a microscope objective, the digital image captured for that angle of illumination may comprise information about higher spatial frequencies, and thereby finer details of the stained sample than the microscope objective normally allows. This may, in turn, allow for the microscope objective to capture phase information associated with the stained sample and information relating to details not normally being resolvable by the microscope objective, which may be used in by the computational imaging technique when reconstructing the digital image of the stained sample. Put differently, by illuminating the stained sample from an angle larger than the numerical aperture of the microscope objective may allow for an improved reconstruction of the digital image of the stained sample. In particular, it may allow for reconstructing a digital image of the stained sample having a relatively higher resolution than the digital images of the reconstruction set.

The ground truth may comprise a digital image having a relatively higher resolution than a digital image of the training set of digital images.

An associated advantage is that the machine learning model may be trained to construct a digital image of the artificially stained sample having a relatively higher resolution than one or more of the digital images of the training set. Put differently, the trained machine learning model may be used to construct a digital image depicting an artificially stained sample having a relatively higher resolution than one or more of digital images input to the trained machine learning model. Hence, the digital images (e.g., digital images of an unstained sample) used as input for the trained machine learning model may be captured using a microscope objective having a lower numerical aperture, while still allowing the constructed digital image depicting an artificially stained sample to have a resolution similar to a digital image captured using a microscope objective having a relatively higher numerical aperture.

According to a second aspect, a method for constructing a digital image depicting an artificially stained sample is provided according to claim The method of the second aspect comprising: receiving an input set of digital images of an unstained sample, wherein the input set of digital images is acquired by illuminating the unstained sample from a plurality of directions and capturing a digital image for each of the plurality of directions; constructing an digital image depicting an artificially stained sample by: inputting the input set of digital images into a machine learning model being trained according to the method of the first aspect, and receiving, from the machine learning model, an output comprising the digital image depicting an artificially stained sample.

By inputting the input set of digital images into a machine learning model trained according to the method of the first aspect, the process of imaging the unstained sample may be more efficient, since a digital image depicting an artificially stained sample is output from the trained machine learning model using digital images of the unstained sample. Put differently, the trained machine learning model may output a digital image depicting an artificial stained sample replicating a digital image of a stained sample. Hence, there is no need to apply a staining agent to the unstained sample prior to imaging. This may, in turn, allow for a more rapid and/or more cost-effective imaging of the sample. It may further remove the need for manually handling potentially toxic chemicals needed during staining (e.g., the staining agent or other associated chemicals), which may allow for an imaging process which is safer to humans (e.g., lab personnel).

The input set of digital images of the unstained sample may be acquired using a microscope objective and an image sensor, and wherein at least one direction of the plurality of directions may correspond to an angle larger than a numerical aperture of the microscope objective.

The input set of digital images may be acquired by illuminating the unstained sample with white light from the plurality of directions and capturing a digital image for each of the plurality of directions.

The above-mentioned features of the first aspect, when applicable, apply to this second aspect as well. In order to avoid undue repetition, reference is made to the above.

According to a third aspect a device for training a machine learning model to construct a digital image depicting an artificially stained sample is provided according to claim 12.

The device comprising circuitry configured to execute: a first receiving function configured to receive a training set of digital images, wherein the training set of digital images is acquired by illuminating an unstained sample from a plurality of directions and capturing a digital image of the unstained sample for each of the plurality of directions; a second receiving function configured to receive a ground truth comprising a digital image of a stained sample, wherein the stained sample is formed by applying a staining agent to the unstained sample; and a training function configured to train a machine learning model to construct a digital image depicting an artificially stained sample according to the method of the first aspect using the received training set of digital images of the unstained sample and the received ground truth.

The training set may be acquired by illuminating the unstained sample with white light from the plurality of directions and capturing a digital image for each of the plurality of directions.

The above-mentioned features of the first aspect and/or the second aspect, when applicable, apply to this third aspect as well. In order to avoid undue repetition, reference is made to the above.

According to a fourth aspect, a microscope system is provided according to claim 13. The microscope system comprising: an illumination system configured to illuminate an unstained sample from a plurality of directions; an image sensor; at least one microscope objective arranged to image the unstained sample onto the image sensor; and circuitry configured to execute: an acquisition function configured to acquire an input set of digital images by being configured to: control the illumination system to illuminate the unstained sample from each of the plurality of directions, and control the image sensor to capture a digital image for each of the plurality of directions, and an image construction function configured to: input the input set of digital images into a machine learning model being trained according to the method of the first aspect, and receive, from the machine learning model, an output comprising a digital image depicting an artificially stained sample.

The illumination system may comprise a plurality of light sources, and wherein each light source of the plurality of light sources may be configured to emit white light. Each light source of the plurality of light sources may be configured to illuminate the unstained sample from one direction of the plurality of directions.

An associated advantage is that information about the sample pertaining to a wider range of the electromagnetic spectrum may be captured compared to an illumination system comprising narrowband light sources (e.g., monochromatic light sources).

A further associated advantage is that multispectral information about the sample may be captured with fewer light sources compared to an illumination system comprising narrowband light sources (e.g., monochromatic light sources). This, since light sources configured to emit white light may emit light of a wider wavelength range compared to narrowband light sources (e.g., monochromatic light sources) typically used in Fourier ptychography applications. Thus, compared to narrowband light sources, fewer light sources configured to emit white light may be needed to cover a particular range of the electromagnetic spectrum.

The illumination system may comprise a plurality of light sources arranged on a curved surface being concave along at least one direction along the surface, and wherein each of the plurality of light sources may be configured to illuminate the unstained sample from one of the plurality of directions.

Arranging the plurality of light sources on a curved surface may be advantageous in that the distance from each light source to a current imaging position (i.e., a position or portion of the unstained sample currently being imaged) of the microscope system may be similar. Since this distance is similar, an intensity of light emitted from each light source may be similar at the current imaging position. This may be understood as an effect of the inverse square law. Thus, the unstained sample may be illuminated by light having similar intensities for each direction in the plurality of directions, which may, in turn, allow for a more homogenous illumination of the unstained sample independent of illumination direction. It may be advantageous to configure the illumination system such that the distance from each light source to the current imaging position is large enough such that each light source may be treated as a point source. This may allow the light to be quasi-coherent at the current imaging position. Hence, the distance from each light source to the current imaging position may be chosen such that an intensity of light from each light source at the current imaging position is high enough to produce the input set of digital images.

The curved surface may be formed of facets. Put differently, the curved surface may be constructed by a plurality of flat surfaces.

An associated advantage is that the illumination system may be easier to manufacture, thereby reducing associated economic costs.

A further associated advantage is that the illumination system may be modular. It may thereby be easier to replace one or more light sources (e.g., in case they break and/or are defective).

A numerical aperture of the at least one microscope objective may be 0.4 or lower. Put differently, the at least one microscope objective may have a magnification of 20 times or lower.

An associated advantage is that a larger portion of the unstained sample may be imaged at a time compared to a microscope objective having a higher numerical aperture. This may, in turn, allow for a number of individual imaging positions needed to image a majority of the unstained sample to be reduced. Thus, a time needed to image a majority of the unstained sample may thereby be reduced. This may, in particular, be advantageous in case the machine learning model is trained to construct a digital image having a relatively larger resolution than the digital images input to the machine learning model (i.e., the digital images of the input set). Hence, the unstained sample may be imaged more quickly, while the digital image depicting the artificially stained sample may have a resolution relatively higher than what the at least one microscope objective normally allows.

The above-mentioned features of the first aspect, the second aspect, and/or the third aspect, when applicable, apply to this fourth aspect as well. In order to avoid undue repetition, reference is made to the above.

According to a fifth aspect a non-transitory computer-readable storage medium is provided according to claim 17. The non-transitory computer-readable storage medium comprising program code portions which, when executed on a device having processing capabilities, performs the method according to first aspect or the method according to the second aspect.

The above-mentioned features of the first aspect, the second aspect, the third aspect, and/or the fourth aspect, when applicable, apply to this fifth aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the inventive concept. The figures should not be considered limiting the inventive concept to the specific variant; instead, they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.
Figure 1 illustrates a device for training a machine learning model.
Figure 2 illustrates a microscope system.
Figure 3 is a block scheme of a method for training a machine learning model to construct a digital image depicting an artificially stained sample.
Figure 4 is a block scheme of a method for constructing a digital image depicting an artificially stained sample using a trained machine learning model.
Figure 5 illustrates an illumination system having a curved surface formed by facets.
Figure 6A illustrates a digital image of an unstained sample.
Figure 6B illustrates a digital image depicting an artificially stained sample.
Figure 6C illustrates a digital image of a stained sample.
Figure 7 illustrates a non-transitory computer-readable storage medium.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

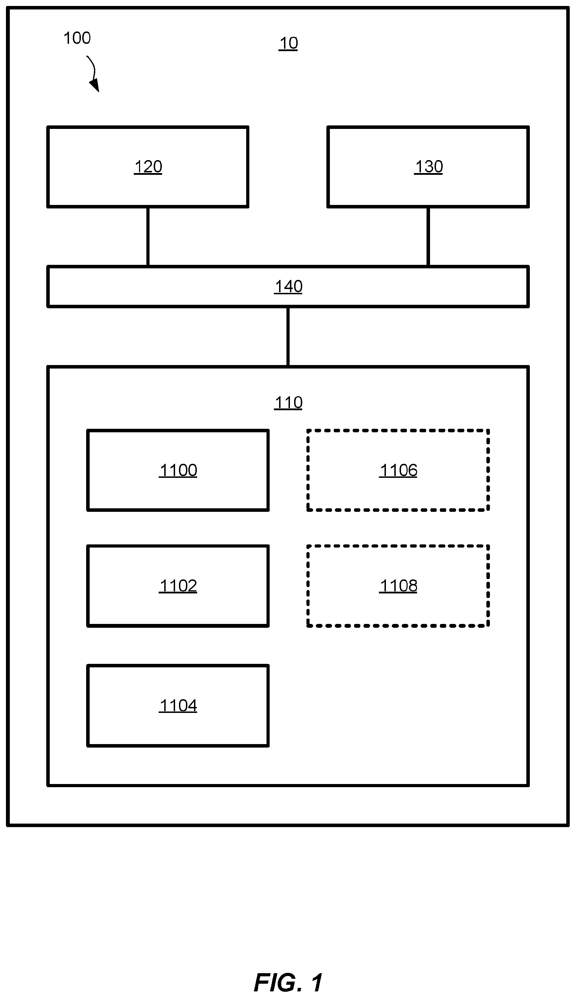

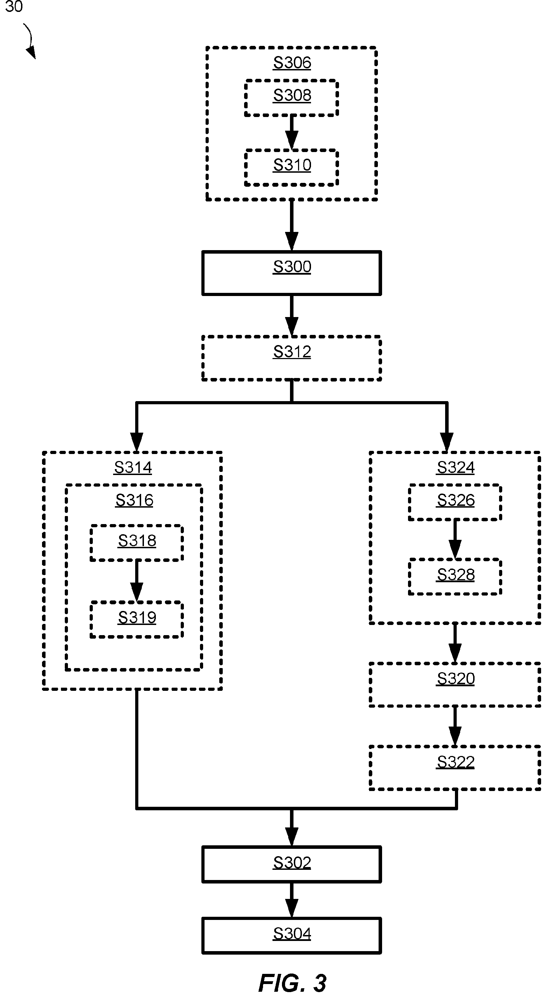

A device 10 and a method 30 for training a machine learning model to construct a digital image depicting an artificially stained sample will now be described with reference to Fig. 1 and Fig. 3.

Figure 1 illustrates a device 10 for training a machine learning model to construct a digital image depicting an artificially stained sample. Here, "digital image depicting an artificially stained sample" should be construed as a computer-colorized digital image of the unstained sample. This digital image may be similar, or even identical, to a digital image of a stained sample (i.e., the unstained sample to which a staining agent has been applied). Therefore, the depicted artificially stained sample may have a contrast similar to a depicted stained sample (which have actually been stained by a staining agent). The device 10 may be a computing device. Examples of suitable computing devices comprise computers, servers, smartphones, tablets, etc. The device 10 may further be implemented as part of a cloud server and/or a distributed computing arrangement. It is further to be understood that the device 10 may comprise further components, for example input devices (mouse, keyboard, touchscreen, etc.) and/or a display. The device 10 may further comprise a power source, for example a connection to electrical power, a battery, etc. The device 10 comprises circuitry 100. As is illustrated in the example of Fig. 1, the circuitry 100 may comprise one or more of a memory 110, a processing unit 120, a transceiver 130, and a data bus 140. The memory 110, the processing unit 120, and the transceiver 130 may communicate via the data bus 140. The processing unit 120 may be a central processing unit (CPU). The transceiver 130 may be configured to communicate with external devices. For example, the transceiver 130 may be configured to communicate with servers, computer external peripherals (e.g., external storage), etc. The external devices may be local devices or remote devices (e.g., a cloud server). The transceiver 130 may be configured to communicate with the external devices via an external network (e.g., a local-area network, the internet, etc.) The transceiver 130 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire.

The memory 110 may be a non-transitory computer-readable storage medium. The memory 110 may be a random-access memory. The memory 110 may be a non-volatile memory. As is illustrated in the example of Fig. 1, the memory 110 may store program code portions corresponding to one or more functions. The program code portions may be executable by the processing unit, which thereby performs the functions. Hence, when it is referred to that the circuitry 100 is configured to execute a specific function, the processing unit 120 may execute program code portions corresponding to the specific function which may be stored on the memory 110. However, it is to be understood that one or more functions of the circuitry 100 may be hardware implemented and/or implemented in a specific integrated circuit. For example, one or more functions may be implemented using field-programmable gate arrays (FPGAs). Put differently, one or more functions of the circuitry 100 may be implemented in hardware or software, or as a combination of the two.

The circuitry 100 is configured to execute a first receiving function 1100, a second receiving function 1102, and a training function 1104. As is illustrated in Fig. 1, the circuitry 100 may be further configured to execute one or more of a reconstruction function 1106 and a third receiving function 1108.

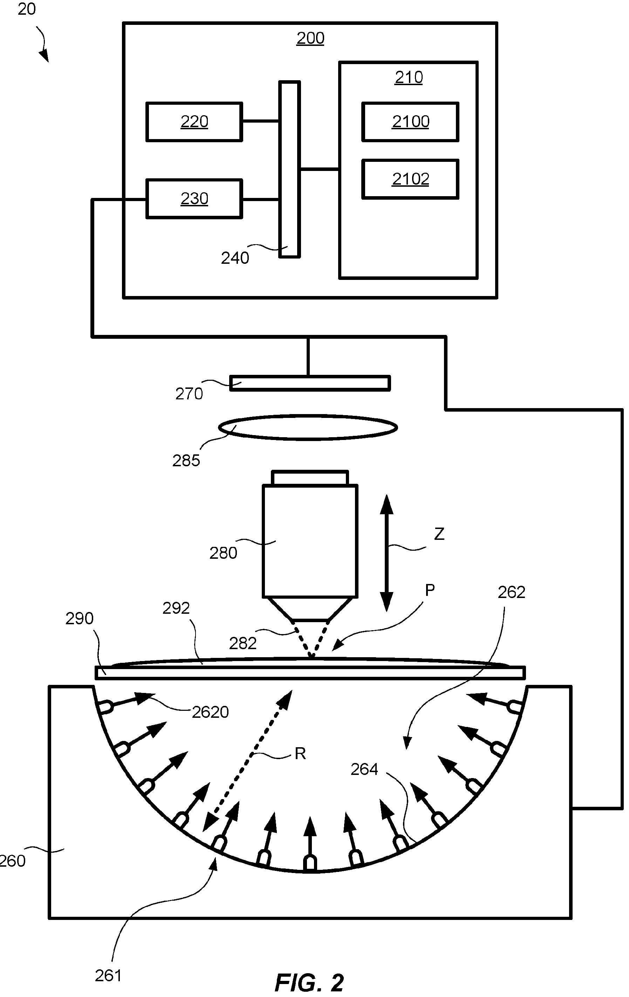

The first receiving function 1100 is configured to receive a training set of digital images. The training set of digital images is acquired by illuminating an unstained sample from a plurality of directions and capturing a digital image of the unstained sample for each of the plurality of directions. Put differently, the training set of digital images of the unstained sample may be acquired by illuminating the unstained sample from a plurality of directions, and capturing, for each direction of the plurality of directions, a digital image of the unstained sample. The training set of digital images may be acquired by illuminating the unstained sample with white light from the plurality of directions and capturing a digital image for each of the plurality of directions. Put differently, the training set of digital images of the unstained sample may be acquired by illuminating the unstained sample with white light from a plurality of directions, and capturing, for each direction of the plurality of directions, a digital image of the unstained sample. The unstained sample may be a sample without applied staining agent. The unstained sample may have a relatively lower contrast compared to a stained sample. The contrast of the unstained sample may be low such that it may be difficult, or even impossible, to image features of the unstained sample using conventional microscopy. For example, white blood cells are typically almost transparent and may therefore be difficult to image without staining the sample. The first receiving function 1100 may be configured to receive the training set of digital images via the transceiver 130. For example, the training set of digital images may be captured using an external microscope system and then transmitted to the transceiver 130 of the device 10. As a further example, the device 10 may form part of a microscope system and the training set of digital images may be received from an image sensor of the microscope system. The memory 110 may be configured to store the training set of digital images, and the first receiving function 1100 may be configured to receive the training set of digital images from the memory 110. The training set of digital images may be acquired using a microscope objective and an image sensor. The unstained sample may be sequentially illuminated from at least one direction of the plurality of directions. Each digital image of the training set of digital images may be captured when the unstained sample is illuminated from at least one direction of the plurality of directions. Thus, the unstained sample may be illuminated from a single direction of the plurality of direction or from several directions of the plurality of directions at the same time. At least one direction of the plurality of directions may correspond to an angle larger than a numerical aperture of the microscope objective. The numerical aperture of the microscope objective may be a dimensionless number associated with a range of angles over which the microscope objective accepts light. Hence, a direction larger than the numerical aperture may be understood as a direction corresponding to an angle larger than the range of angles over which the microscope objective is configured to accept light when it is used for brightfield microscopy. Since the unstained sample may be illuminated from a plurality of different directions and a digital image may be captured for each of the plurality of directions, information regarding finer details of the unstained sample may be captured than what normally may be resolvable by the microscope objective used to image the unstained sample. This can be understood as different portions of Fourier space (i.e., the spatial frequency domain) associated with the unstained sample are imaged for different illumination directions. This technique may be known in the art as Fourier ptychography. Generally in Fourier ptychography, high spatial frequencies in Fourier space associated with a sample (e.g., the unstained sample) are sampled when that sample is illuminated from a direction corresponding to a large angle of incidence. Hence, in case the unstained sample is illuminated from a direction corresponding to an angle larger than the numerical aperture of the microscope objective, even higher spatial frequencies of the Fourier space may be sampled. This is possible since the light is scattered by the unstained sample, and a portion of the light scattered by the unstained sample may be collected by the microscope objective. This illumination technique may further allow information regarding a refractive index associated with the unstained sample to be captured by the at least one microscope objective. This can be understood as an effect of refraction of light being dependent on an angle of incident for light illuminating the unstained sample and the refractive index of the unstained sample. Information regarding the refractive index of the unstained sample may, in turn, allow phase information (typically referred to as quantitative phase within the art) associated with the unstained sample to be determined. Since the plurality of digital images comprises information associated with one or more of fine details of the unstained sample, a refractive index associated with the unstained sample, and phase information associated with the unstained sample, this information may be used in the training of the machine learning model, which may, in turn, allow for a machine learning model being trained to more accurately construct the digital image depicting the artificially stained sample than what would be allowed in case the plurality of digital images were captured from only one direction. Put differently, it may allow for a machine learning model being trained to construct the digital image depicting an artificially stained sample more accurately than what would be allowed in case the plurality of digital images were captured from only one direction or using a conventional microscope (e.g., using brightfield illumination). It is to be understood that the information relating to one or more of finer details of the unstained sample, refractive index associated with the unstained sample, and phase information associated with the unstained sample may be captured by illuminating the unstained sample from more than one of the plurality of different directions at a time, for example from a subset of the plurality of directions. The subset of the plurality of directions may comprise directions corresponding to different portions of the Fourier space of the unstained sample. The different portions of the Fourier space of the unstained sample may be partially overlapping or non-overlapping. Thus, a microscope objective having a relatively lower magnification may be used while still being able to capture information related to fine details of the unstained sample. For example, by illuminating the unstained sample from the plurality of directions, a microscope objective having a numerical aperture of 0.4 may capture information relating to fine details to the same extent that a microscope objective being used in conventional microscopy (e.g., using brightfield illumination) and having a numerical aperture of 1.25. Put differently, by illuminating the unstained sample from the plurality of directions, a microscope objective having a magnification of 20 times may capture information relating to fine details to the same extent that a microscope objective being used in conventional microscopy (e.g., using brightfield illumination) and having a magnification of 100 times. It is to be understood that the above magnifications and numerical apertures are examples only, and the present invention may be implemented for other magnifications and/or numerical apertures as well. A suitable microscope system comprising a microscope objective and an image sensor will be described in connection with Fig. 2.

The second receiving function 1102 is configured to receive a ground truth comprising a digital image of a stained sample. The ground truth may be information that is known to be real and/or true. In this context, since the machine learning model is trained to construct a digital image depicting an artificially stained sample, the ground truth may represent a stained sample. For example, the ground truth may comprise a digital image of a stained sample. The ground truth may be received via the transceiver 130. For example, the ground truth may be formed on a different device and/or stored on a different device and transmitted to the device 10 via the transceiver 130. The stained sample is formed by applying a staining agent to the unstained sample. The stained sample may be formed such that relative positions of features (e.g., objects) within the stained sample may remain substantially undisturbed compared to the unstained sample. Put differently, features of the unstained sample and corresponding features of the stained sample may be at a same relative position (i.e., relative to the unstained sample or the stained sample). This may, in turn, allow features in the stained sample to be correlated (or paired) with corresponding features in the unstained sample. Alternatively, or additionally, the machine learning model may be trained using CycleGAN. As is known within the art, CycleGAN is a technique capable of training image-to-image translation models without paired examples (i.e., without having paired examples of features in the stained sample and features in the unstained sample). This may be advantageous, since it may allow the unstained sample to be stained in an easier manner, since the machine learning model may be trained without features in the stained sample being correlated (or paired) with corresponding features in the unstained sample.

The staining agent may be one or more chemical agents configured to increase contrast of the unstained sample (e.g., by changing the color of the unstained sample) when applied to the unstained sample. The staining agent may be chosen depending on the type of sample and/or what type of objects within the sample is of interest. For example, within hematology, samples (e.g., blood smears) are typically stained by using May Grünewald-Giemsa (MGG), Wright-Giemsa (WG), or Wright. As a further example, within pathology, samples are typically stained by using Hematoxylin-eosin (H&E). Different staining agents may increase the contrast for different objects and/or substances within a sample. For example, some staining agents may be adapted increase the contrast of proteins, etc. Hence, which staining agent to be used may be chosen depending on the sample and/or on the type of objects of interest in the sample. The ground truth comprising the digital image of the stained sample may be formed by acquiring a digital image of the stained sample. The digital image of the stained sample may be acquired by illuminating the stained sample simultaneously from a subset of the plurality of directions. The subset of the plurality of directions may be more than one direction of the plurality of directions. Which directions, and the number of directions, of the subset may be chosen such that illumination of the stained sample is similar to conventional microscopy illumination (e.g., brightfield illumination). The subset of directions may, e.g., be a majority of, or all, directions of the plurality of directions. The digital image of the stained sample may be captured while the stained sample is illuminated simultaneously from the subset of the plurality of directions. Hence, the digital image of the stained sample may be similar to a digital image captured by a conventional microscope system using, for instance, brightfield illumination. The training set of digital images may be acquired prior to the digital image of the ground truth. This is advantageous since the training set may comprise digital images of the unstained sample, and the ground truth may comprise a digital image of the same sample with applied staining agent.

The digital image of the stained sample may be acquired in other manners than described above. For example, the digital image of the stained sample may be reconstructed using a computational imaging technique. Here, "computational imaging technique" should be understood as a computational process which can form a digital image by combining information of several digital images captured during various conditions (e.g., different illumination conditions). Examples of computational imaging technique that may be suitable in this context are Fourier ptychography and machine learning. The computational imaging technique may be a reconstruction machine learning model trained to reconstruct a digital image of the stained sample. The reconstructed digital image of the stained sample may have a resolution similar to resolutions of the digital images of the reconstruction set. The reconstructed digital image of the stained sample may have a resolution relatively higher than the resolutions of one or more of the digital images of the reconstruction set. Reconstruction of a digital image having a relatively higher resolution than the resolutions of the digital images of the reconstruction set may be allowed since the reconstruction set is acquired by illuminating the stained sample from a plurality of directions and capturing a digital image for each of the plurality of directions. Hence, the third receiving function 1108 may be configured to receive a reconstruction set of digital images of the stained sample. The reconstruction set may be received via the transceiver 130. For example, the reconstruction set may be formed on a different device and/or stored on a different device and transmitted to the device 10 via the transceiver 130. The reconstruction set may be acquired by illuminating the stained sample from a plurality of directions and capturing a digital image for each of the plurality of directions. Put differently, the reconstruction set of digital images of the stained sample may be acquired by illuminating the stained sample from a plurality of directions, and capturing, for each direction of the plurality of directions, a digital image of the stained sample. The reconstruction set of digital images may be acquired using a microscope objective and an image sensor, and at least one direction of the plurality of directions may correspond to an angle larger than a numerical aperture of the microscope objective. Thus, the reconstruction set of digital images of the stained sample may be acquired in a similar manner as the training set of digital images of the unstained sample, and the above description in connection to the training set therefore applies, mutatis mutandis, to the reconstruction set of digital images of the stained sample. The reconstruction function 1106 may be configured to reconstruct, using the computational imaging technique and the received reconstruction set of digital images, the digital image of the stained sample. By illuminating the stained sample from an angle larger than the numerical aperture of a microscope objective, the digital image captured for that angle of illumination may comprise information about higher spatial frequencies, and thereby finer details of the stained sample than the microscope objective normally allows. The illumination technique may further allow for the microscope objective to capture phase information associated with the stained sample and information relating to details not normally being resolvable by the microscope objective, which may be used in by the computational imaging technique when reconstructing the digital image of the stained sample. Put differently, by illuminating the stained sample from an angle larger than the numerical aperture of the microscope objective may allow for an improved reconstruction of the digital image of the stained sample. In particular, it may allow for reconstructing a digital image of the stained sample having a relatively higher resolution than the digital images of the reconstruction set. Hence, the digital image of the stained sample may be reconstructed from the reconstruction set of digital images of the stained sample using the computational imaging technique and the received reconstruction set of digital images of the stained sample.

The ground truth may comprise a digital image having a relatively higher resolution than a digital image of the training set of digital images. The digital image of the stained sample may be a digital image having a relatively higher resolution than each digital image of the training set of digital images. As discussed above, the digital image of the stained sample may be reconstructed using the computational imaging technique, and the reconstructed digital image may have a resolution relatively higher than the resolution of a digital image of the reconstruction set of digital images. Thus, the computational imaging technique may be configured to reconstruct the digital image of the stained sample such that the resolution of the reconstructed digital image is higher than one or more digital images of the training set of digital images of the unstained sample. Alternatively, or additionally, the digital image of the stained sample may be captured using a microscope objective having a relatively higher magnification than the microscope objective used to capture one or more digital images of the training set of digital images of the unstained sample. Put differently, since the microscope objective used to capture the digital image of the stained sample may have a relatively larger magnification, that digital image may be depict a smaller area of the stained sample compared to an image captured using the microscope objective used to capture the training set of digital images. For this reason, the digital image of the stained sample may be formed from a plurality of individual digital images of the stained sample. For example, by combining (e.g., by stitching) the plurality of individual digital images. The digital image of the stained sample may thereby depict an area of the stained sample comparable to an area of the unstained sample imaged by the microscope objective used to capture the training set of digital images. Alternatively, each digital image of the training set may be cropped such that an area of the unstained sample depicted in each cropped digital image of the training set may be similar and/or comparable to an area of the stained sample depicted in the digital image of the stained sample.

The training function 1104 is configured to train the machine learning model to construct a digital image depicting an artificially stained sample using the received training set of digital images of the unstained sample and the received ground truth. The machine learning model may be a convolutional neural network. The machine learning model may be a convolutional neural network suitable for digital image construction. The training function 1104 is configured to receive the ground truth comprising the digital image of the stained sample. The training function 1104 may receive the ground truth from the second receiving function 1102. The training function 1104 is further configured to acquire the training set of digital images of the unstained sample. As explained previously, the training set of digital images of the unstained sample is acquired by illuminating the unstained sample (possibly with white light) from a plurality of directions and capturing a digital image for each of the plurality of directions. The training function 1104 is further configured to train the machine learning model to construct a digital image depicting an artificially stained sample using the training set of digital images of the unstained sample and the received ground truth. Hence, the present inventive concept allows for training the machine learning model to construct digital images replicating a stained sample using a plurality of digital images of an unstained sample. Hence, by using the trained machine learning model, a digital image depicting a stained sample (i.e., the artificially stained sample) may be constructed without having to apply a staining agent to the unstained sample. In case the ground truth comprises a digital image of the stained sample having a relatively higher resolution than one or more digital images of the training set of digital images of the unstained sample, the machine learning model may be trained to construct a digital image of the artificially stained sample having a relatively higher resolution than one or more of the digital images of the digital images input to the machine learning model (e.g., the training set). The training function 1104 may be configured to train the machine learning model iteratively and/or recursively until a difference between an output of the machine learning model (i.e., the digital image depicting an artificially stained sample) and the ground truth (e.g., the digital image depicting the stained sample) is smaller than a predetermined threshold. Hence, the training function 1104 may train the machine learning model to correlate the training set of digital images of the unstained sample to the ground truth (e.g., the digital image depicting the stained sample). A smaller difference between the output of the machine learning model and the ground truth may indicate a higher accuracy of the digital image depicting the artificially stained sample provided by the machine learning model. Hence, preferably, the difference between the output of the machine learning model and the ground truth may be minimized. A skilled person realizes that minimizing functions (e.g., the loss function) may be associated with tolerances. For example, the loss function may be regarded as being minimized even though the minimized loss function has a value which is not a local and/or global minimum.

The machine learning model may be trained using a plurality of training sets and a plurality of corresponding ground truths. Put differently, the machine learning model may be trained using a plurality of different samples. This may allow for an improved training of the machine learning model to construct the digital image depicting an artificially stained sample. The machine learning model may be trained to construct digital images of artificially stained samples for a plurality of different sample types. In such case, the machine learning model may, for each sample type, be trained using a training set of digital images of an unstained sample of the sample type, and a corresponding ground truth associated with a stained sample of the respective sample type (e.g., a digital image of a stained sample of the sample type). This may allow the trained machine learning model to construct digital images depicting artificially stained samples of different sample types.

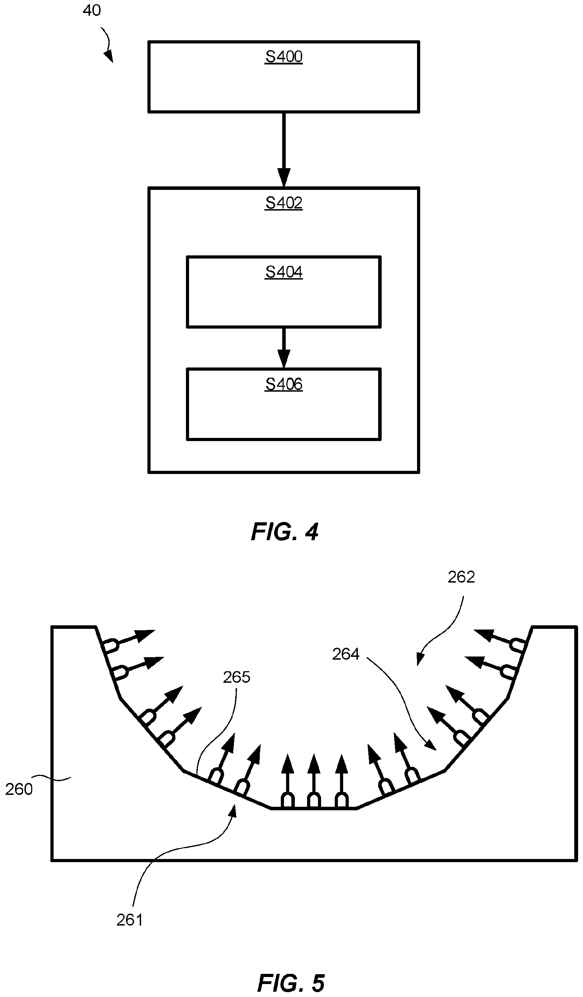

A microscope system 20 and a method 40 for constructing a digital image depicting an artificially stained sample will now be described with reference to Fig. 2 and Fig. 4. Figure 2 illustrates a microscope system 20. The microscope system 20 of Fig. 2 is suitable to acquire sets of digital images of an unstained sample to be used by a machine learning model trained according to the above to construct a digital image depicting an artificially stained sample. Further, the microscope system 20 of Fig. 2 may be suitable to acquire the training set of digital images of an unstained sample and/or a digital image of a stained sample used to train the machine learning model according to the above. The microscope system 20 comprises an illumination system 260, an image sensor 270, at least one microscope objective 280, and circuitry 200. The microscope system 20 may further comprise a sample holder 290 as illustrated in the example of Fig. 2. The circuitry 200 may comprise one or more of a memory 210, a processing unit 220, a transceiver 230, and a data bus 240. The processing unit 220 may comprise a central processing unit (CPU) and/or a graphical processing unit (GPU). The transceiver 230 may be configured to communicate with external devices. For example, the transceiver 230 may be configured to communicate with servers, computer external peripherals (e.g., external storage), etc. The external devices may be local devices or remote devices (e.g., a cloud server). The transceiver 230 may be configured to communicate with the external devices via an external network (e.g., a local-area network, the internet, etc.) The transceiver 230 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire. The memory 210, the processing unit 220, and the transceiver 230 may communicate via the data bus 240. The illumination system 260 and/or the image sensor 270 may be configured to communicate with the circuitry 200 via the transceiver 230 as illustrated in Fig. 2. Additionally, or alternatively, the illumination system 260 and/or the image sensor 270 may be configured to directly (e.g., via a wired connection) communicate with the data bus 240. The memory 210 may be a non-transitory computer-readable storage medium. The memory 210 may be a random-access memory. The memory 210 may be a non-volatile memory. As is illustrated in the example of Fig. 2, the memory 210 may store program code portions corresponding to one or more functions. The program code portions may be executable by the processing unit 220, which thereby performs the functions. Hence, when it is referred to that the circuitry 200 is configured to execute a specific function, the processing unit 220 may execute program code portions corresponding to the specific function which may be stored on the memory 210. However, it is to be understood that one or more functions of the circuitry 200 may be hardware implemented and/or implemented in a specific integrated circuit. For example, one or more functions may be implemented using field-programmable gate arrays (FPGAs). Put differently, one or more functions of the circuitry 200 may be implemented in hardware or software, or as a combination of the two.

Even though the image sensor 270 is illustrated on its own in Fig. 2, it is to be understood that the image sensor 270 may be comprised in a camera. In the example of Fig. 2, the sample holder 290 is a microscope slide onto which an unstained sample 292 has been applied. It is to be understood that the sample 292 may be covered by a coverslip (not illustrated in Fig. 2). The sample holder 290 may be configured to hold the sample 292 to be analyzed. The sample holder 290 may be movable (e.g., by being coupled to manual and/or motorized stages), thereby allowing the sample 292 to be moved such that different portions of the sample 292 may be imaged by the at least one microscope objective 280.

The illumination system 260 is configured to illuminate the unstained sample 292 from a plurality of directions. As is illustrated in Fig. 2, the illumination system may comprise a plurality of light sources 261. The light sources may be light-emitting diodes (LEDs). The light sources may be lasers. The light sources may emit incoherent light, quasi-coherent light, or coherent light. Each light source of the illumination system 260 may be arranged to illuminate the sample 292 from one of the plurality of directions 262. The illumination system 260 may be configured to simultaneously illuminate the sample 292 with one or more light sources of the plurality of light sources 261. Put differently, the illumination system 260 may be configured to simultaneously illuminate the sample 292 from one or more directions of the plurality of directions 262. Each light source of the plurality of light sources 261 may be configured to emit white light. The light sources may be LEDs configured to emit white light. An LED configured to emit white light may comprise an LED configured to emit blue light and a fluorescent layer configured to convert the emitted blue light to white light. For example, an LED configured to emit white light may be formed by, e.g., a blue LED covered in a layer of fluorescent material which when illuminated with blue light emits white light. Alternatively, or additionally, the light sources may be lasers configured to emit white light. For instance, light emitted from a laser may be converted to light with a broader spectral bandwidth. An example of such conversion process may within the art be known as supercontinuum generation. As is further illustrated in Fig. 2, the plurality of light sources 261 may be arranged on a curved surface 264 being concave along at least one direction along the surface. Each light source of the plurality of light sources 261 may be configured to illuminate the unstained sample 292 from one of the plurality of directions. As illustrated in the example of Fig. 2, the curved surface 264 may be concave along at least one direction along the surface 264. For example, the curved surface 264 may be a cylindrical surface. The curved surface 264 may be concave along two perpendicular directions along the surface. For example, the curved surface 264 may have a shape similar to a segment of a sphere. A segment of a sphere may be a spherical cap or a spherical dome. Arranging the plurality of light sources 261 on a curved surface 264 may be advantageous in that a distance R from each light source to a current imaging position P of the microscope system 20 may be similar. Since this distance is similar, an intensity of light emitted from each light source may be similar at the current imaging position P. This may be understood as an effect of the inverse square law. Thus, the sample 292 may be illuminated by light having similar intensities for each direction in the plurality of directions 262, which may, in turn, allow for a more homogenous illumination of the sample 292 independent of illumination direction. The distance R from each light source to the current imaging position P may be in a range from 4 cm to 15 cm. It may be advantageous to configure the illumination system 260 such that the distance R from each light source to the current imaging position P is large enough such that each light source may be treated as a point source. This may allow the light to be quasi-coherent at the current imaging position P. Hence, the distance R from each light source to the current imaging position P may be larger than 15 cm, given that an intensity of light from each light source at the current imaging position is high enough to produce the sets of digital images. In particular, the distance R between each light source may be larger than 15 cm in case one or more of the plurality of light sources are lasers. However, it is to be understood that the plurality of light sources 261 may be arranged on a flat surface or on a surface having an irregular shape. It is further to be understood that Fig. 2 illustrates a cross section of the microscope system 20, and in particular the illumination system 260. Hence, the curved surface 264 of the illumination system 260 illustrated in Fig. 2 may be a cylindrical surface or a portion of a spherical surface (or of a quasi-spherical surface). The curved surface 264 of the illumination system 260 may be bowl shaped. The curved surface 264 may be formed of facets 265, which is illustrated in the example of Fig. 5. Put differently, the curved surface 264 may be formed of a plurality of flat surfaces. The curved surface 264 may be a portion of a quasi-spherical surface comprising a plurality of facets or segments. Hence, the curved surface 264 may be a portion of a surface of a polyhedron. An example of such polyhedron may be a truncated icosahedron. The plurality of light sources 261 may be arranged on the facets 265. Each light source may be arranged such that the light source is configured to emit light in a direction substantially parallel to a normal of the associated facet. It is to be understood, similar to the example illustrated in Fig. 2, that Fig. 5 illustrates a cross section of the illumination system 260. Hence, the curved surface 264 of the illumination system 260 illustrated in Fig. 5 may be a quasi-cylindrical surface or a portion of a quasi-spherical surface. The curved surface 264 of the illumination system 260 of Fig. 5 may have a shape similar to a bowl. Hence, the facets 265 of Fig. 5 are illustrated with lines, and it is to be understood that each facet 265 may be a flat surface having at least three sides. For instance, the curved surface 264 may be formed of facets having five sides and facets having six sides (e.g., similar to an inner surface of a football or soccer ball). Even though that the curved surface 264 in Fig. 5 is illustrated as a continuous surface, it is to be understood that each facet may be separate. Hence, the curved surface may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets. It is further to be understood that the number facets 265 of the illumination system 260 of Fig. 5 is an example only, and other numbers of facets 265 may be used to form the curved surface 264 of the illumination system 260. It is furthermore to be understood that the number of light sources on each facet 265 is an example only, and that number may vary.

The at least one microscope objective 280 is arranged to image the unstained sample 292 onto the image sensor 270. The at least one microscope objective 280 may comprise a first microscope objective. A numerical aperture of the first microscope objective may be 0.4 or lower. Put differently, the first microscope objective may have a magnification of 20 times or lower. Hence, a larger portion of the unstained sample 292 may be imaged at a time compared to a microscope objective having a relatively higher numerical aperture. This may, in turn, allow for a number of individual imaging positions needed to image a majority of the unstained sample 292 to be reduced. Thus, a time needed to image a majority of the unstained sample 292 may thereby be reduced. This may, in particular, be advantageous in case the machine learning model is trained to construct a digital image having a relatively larger resolution than the digital images input to the machine learning model (i.e., the digital images of the input set). Hence, the unstained sample 292 may be imaged more quickly, while the digital image depicting the artificially stained sample may have a resolution relatively higher than what the at least one microscope objective normally allows. The first microscope objective may be used when capturing the digital images of the unstained sample 292. The digital images captured using the first microscope objective may be used when training the machine learning model (i.e., the training set of digital images of the unstained sample) and/or when constructing the digital image depicting an artificially stained sample using the trained machine learning model. It is further to be understood that the first microscope objective may be used to form the ground truth. Put differently, the first microscope objective may be used to capture a digital image of a stained sample to be used as ground truth when the machine learning model is trained.

The at least one microscope 280 may comprise a second microscope objective having a magnification of 100 times and/or a numerical aperture of 1.25. The second microscope objective may be used to acquire a digital image having a relatively higher resolution than a digital image acquired using the first microscope objective. Hence, the second microscope objective may be used to acquire digital images (e.g., the digital image of the stained sample) for use when training the machine learning model. Put differently, digital images captured using the second microscope objective may be used to form the ground truth used when training the machine learning model.

The numerical aperture and magnification of the first microscope objective and/or the second microscope objective are examples only and may be chosen depending on, e.g., a type of the unstained sample 292. For example, the numerical aperture of the first microscope objective may have a magnification of 10 times and/or a numerical aperture of 0.25. It is to be understood that the microscope system 20 may comprise further optics which may be used together with the at least one microscope objective 280 to image the unstained sample 292 onto the image sensor 270. For example, the microscope system may, as illustrated in the example of Fig. 2, comprise at least one relay lens 285 arranged such that the unstained sample 292 may be imaged onto the image sensor 270 by the at least one microscope objective 280 and the at least one relay lens 285. It is further to be understood that the at least one relay lens 285 may be chosen (e.g., focal length, material, size, etc.) depending on the magnification and/or the numerical aperture of the at least one microscope objective 280. Hence, each microscope objective of the at least one microscope objective 280 may have a corresponding relay lens of the at least one relay lens. The at least one microscope objective 280 may be movable in a longitudinal direction Z by being coupled to a manual and/or motorized stage. The longitudinal direction Z may be parallel to an optical axis of the microscope system 20. Put differently, the at least one microscope objective 280 may be movable in a focusing direction of the microscope system 20. Alternatively, or additionally, the sample holder 290 may be movable along the longitudinal direction Z. The at least one microscope objective 280 and/or the sample holder 290 may be movable in a direction such that the unstained sample 292 may be moved such that a focused image may be captured by the image sensor 270 (assuming that the illumination system 260 is configured for brightfield illumination). The longitudinal direction Z of the at least one microscope objective 280 may be controlled by the circuitry 200. For example, the circuitry 200 may be configured to execute a focus function (not illustrated in Fig. 2) configured to adjust a position of the at least one microscope objective 280 along the longitudinal direction Z. The focus function may be configured to automatically adjust the position of the at least one microscope objective 280 along the longitudinal direction Z. Put differently, the focus function may be an autofocus function.

The circuitry 200 is configured to execute an acquisition function 2100 and an image construction function 2102.

The acquisition function 2100 is configured to acquire an input set of digital images by being configured to control the illumination system 260 to illuminate the unstained sample 292 from each of the plurality of directions. The input set of digital images of the unstained sample 292 may thereby be acquired using the at least one microscope objective 280 and the image sensor 270. At least one direction of the plurality of directions 262 may correspond to an angle larger than a numerical aperture 282 of the microscope objective 280. The acquisition function 2100 may be configured to acquire the input set of digital images by being configured to control the illumination system 260 to illuminate the unstained sample 292 with white light from each of the plurality of directions.

The acquisition function 2100 is further configured to control the image sensor 270 to capture a digital image for each of the plurality of directions. Put differently, the acquisition function 2100 may be configured to receive the input set of digital images of an unstained sample 292. The input set of digital images is acquired by illuminating the unstained sample 292 from a plurality of directions 262 and capturing a digital image for each of the plurality of directions 262. The input set of digital images may be acquired by illuminating the unstained sample 292 with white light from the plurality of directions 262 and capturing a digital image for each of the plurality of directions 262. As discussed previously, at least one direction of the plurality of directions may correspond to an angle larger than a numerical aperture 282 of the microscope objective 280. For example, direction 2620 in Fig. 2 may correspond to an angle larger than the numerical aperture 282 of the at least one microscope objective 280. Light entering the at least one microscope objective 280 from the direction 2620 without being scattered may not be allowed to propagate through the microscope objective 280 (i.e., the angle of incidence of light from this direction may be outside the numerical aperture 282 of the microscope objective 280) to the image sensor 270. Thus, light from this direction may need to be scattered by the sample 292 to be allowed to propagate through the microscope objective 280 to the image sensor 270.

The image construction function 2102 is configured to input the input set of digital images into a machine learning model being trained as described in connection with Fig. 1 and Fig. 3. The image construction function 2102 is further configured to receive, from the machine learning model, an output comprising a digital image depicting an artificially stained sample. Put differently, the image construction function 2102 may be configured to construct the digital image depicting an artificially stained sample by inputting the input set of digital images into a trained machine learning model (e.g., trained in the manner described in connection with Fig. 1 and Fig. 3), and receiving, from the trained machine learning model, an output comprising the digital image depicting an artificially stained sample. Hence, the process of imaging the unstained sample 292 may be more efficient, since a digital image depicting an artificially stained sample is output from the trained machine learning model using digital images of the unstained sample 292. Therefore, there is no need to apply a staining agent to the unstained sample 292 prior to imaging. This may, in turn, allow for a more rapid and/or more cost-effective imaging of the unstained sample 292. It may further remove the need for manually handling potentially toxic chemicals needed during staining (e.g., the staining agent or other associated chemicals), which may allow for an imaging process which is safer to humans (e.g., lab personnel).

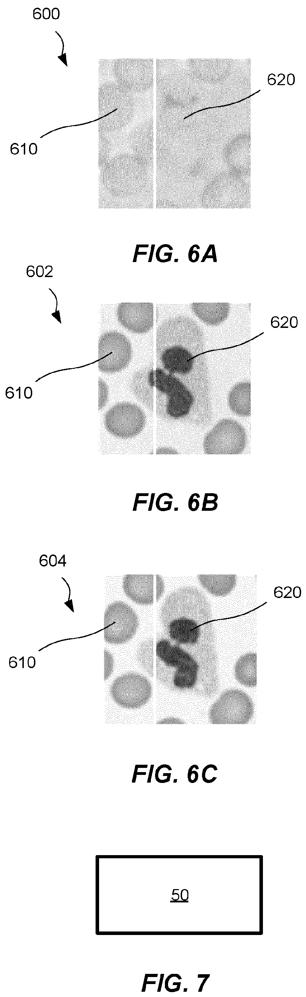

Figure 6A illustrates a digital image 600 of an unstained sample captured using a microscope objective having a magnification of 20 times. In this case, the unstained sample comprises red blood cells 610 and white blood cells 620. A type of the white blood cells 620 in this example is a segmented neutrophil. As is seen in Fig. 6A, some features (e.g., the red blood cells 610) of the unstained sample are visible. However, capturing an input set of digital images of the unstained sample illustrated in Fig. 6A and inputting that input set into a trained machine learning model results in a digital image 602 illustrated in Fig. 6B. In Fig. 6B, it is clear that more features are visible in the artificially stained sample depicted in the digital image 602. In particular, features near the center (which in this case are the white blood cells 620) are clearly visible in the constructed digital image 602 depicting the artificially stained sample, whereas they are, in principle, invisible in the digital image 600 of the unstained sample illustrated in Fig. 6A. It is further apparent from Fig. 6B, that some features visible in the digital image 600 of the unstained sample (e.g., the red blood cells 610) have an increased contrast in the constructed digital image 602 depicting the artificially stained sample. Applying a staining agent (in this case comprising May-Grünwald's eosin methylene blue and Giemsa's azure eosin methylene blue) to the unstained sample depicted in Fig. 6A and capturing a digital image 604 using conventional microscopy (in this case with brightfield illumination) results in Fig. 6C. Upon comparison of Fig. 6B and Fig. 6C, it is clear that the image 602 of the artificially stained sample (i.e., Fig. 6B) is very similar, and almost identical, to the image 604 of the actually stained sample (i.e., Fig. 6C).

Figure 3 is a block scheme of a method 30 for training a machine learning model to construct a digital image 602 depicting an artificially stained sample. The method 30 comprising: receiving S300 a training set of digital images of an unstained sample, wherein the training set of digital images is acquired by illuminating the unstained sample from a plurality of directions and capturing a digital image for each of the plurality of directions; receiving S302 a ground truth comprising a digital image of a stained sample, wherein the stained sample is formed by applying a staining agent to the unstained sample; and training S304 the machine learning model to construct a digital image 602 depicting an artificially stained sample using the received training set of digital images of the unstained sample and the received ground truth. The method 30 may further comprise: acquiring S306 the training set of digital images of the unstained sample by: illuminating S308 the unstained sample from a plurality of directions, and capturing S310, for each direction of the plurality of directions, a digital image of the unstained sample. The training set of digital images may be acquired by illuminating the unstained sample with white light from the plurality of directions and capturing a digital image for each of the plurality of directions. The training set of digital images may be acquired using a microscope objective and an image sensor, and wherein at least one direction of the plurality of directions may correspond to an angle larger than a numerical aperture of the microscope objective. The method 30 may further comprise: applying S312 a staining agent to the unstained sample, thereby forming a stained sample; and forming S314 the ground truth comprising the digital image of the stained sample by: acquiring S316 a digital image of the stained sample. The act of acquiring S316 the digital image of the stained sample may comprise: illuminating S318 the stained sample simultaneously from a subset of the plurality of directions; and capturing S319 the digital image of the stained sample while the stained sample is illuminated simultaneously from the subset of the plurality of directions. The method 30 may further comprise: receiving S320 a reconstruction set of digital images of the stained sample, wherein the reconstruction set may be acquired by illuminating the stained sample from a plurality of directions and capturing a digital image for each of the plurality of directions; and reconstructing S322, using a computational imaging technique, the digital image of the stained sample. The method 30 may further comprise: applying S312 the staining agent to the unstained sample, thereby forming the stained sample; and acquiring S324 the reconstruction set of digital images of the stained sample by: illuminating S326 the stained sample from a plurality of directions, and capturing S328, for each direction of the plurality of directions, a digital image of the stained sample. The reconstruction set of digital images may be acquired using a microscope objective and an image sensor, and wherein at least one direction of the plurality of directions may correspond to an angle larger than a numerical aperture of the microscope objective. The ground truth may comprise a digital image having a relatively higher resolution than a digital image of the training set of digital images.

Figure 4 is a block scheme of a method 40 for constructing a digital image 602 depicting an artificially stained sample. The method 40 comprises: receiving S400 an input set of digital images of an unstained sample, wherein the input set of digital images is acquired by illuminating the unstained sample from a plurality of directions and capturing a digital image for each of the plurality of directions; constructing S402 an digital image depicting an artificially stained sample by: inputting S404 the input set of digital images into a machine learning model being trained according to the method 30 illustrated in Fig. 3, and receiving S406, from the machine learning model, an output comprising the digital image 602 depicting an artificially stained sample. The input set of digital images of the unstained sample may be acquired using a microscope objective and an image sensor, and wherein at least one direction of the plurality of directions may correspond to an angle larger than a numerical aperture of the microscope objective. The input set of digital images may be acquired by illuminating the unstained sample with white light from the plurality of directions and capturing a digital image for each of the plurality of directions.

Figure 7 illustrates a non-transitory computer-readable storage medium 50. The non-transitory computer-readable storage medium 50 comprises program code portions which, when executed on a device having processing capabilities, performs the method 30 illustrated in Fig. 3 or the method 40 illustrated in Fig. 4.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as SwinlR. The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is to be understood that the machine learning model may take further input during training. An example of such input may be a type of staining agent used when forming the stained sample. Such input may then be used when constructing a digital image depicting an artificially stained sample using the trained machine learning model. Further, in this context, the output is a digital image. Thus, the output of the machine learning model may be a matrix representing the constructed digital image depicting an artificially stained sample.

The person skilled in the art realizes that the present inventive concept by no means is limited to the preferred variants described above. On the contrary, many modifications and variations are possible within the scope of the appended claims.

For example, a plurality of machine learning models may be trained for different staining agents. Hence, a type of the artificial staining of the constructed digital image may be chosen by inputting the input set of digital images into the machine learning model trained using that type of staining agent. It is further to be understood that, instead of training a plurality of machine learning models for different staining agents, a single machine learning model may be trained for a plurality of different samples and types of staining agents. For instance, the type of staining agent may be used as a further input to the machine learning model during training. Hence, the trained machine learning model may thereby take the input set of digital images and the type of staining agent to be used for the artificial staining as inputs. The trained machine learning model may be used to output a digital image depicting an artificially stained sample replicating a sample being stained with the type of staining agent used as input to the trained machine learning model.

It is to be understood that, even though the construction of the digital image depicting an artificially stained sample is described in connection with the microscope system of Fig. 2, the construction of the digital image may be implemented in a computing device. Hence, the computing device may be configured to receive the input set of digital images, and to input to received input set of digital images into a machine learning model trained according to the above. The input set of digital images may, e.g., be captured using the microscope system of Fig. 2, and sent to the computing device (i.e., the computing device may be configured to receive the input set of digital images from the microscope system).

Additionally, variations to the disclosed variants can be understood and effected by the skilled person in practicing the claimed invention, within the scope of the appended claims.

## Claims

1. A method (30) for training a machine learning model to construct a digital image (602) depicting an artificially stained sample, the method (30) comprising:
receiving (S300) a training set of digital images of an unstained sample, wherein the training set of digital images is acquired by illuminating the unstained sample with white light from a plurality of directions and capturing a digital image for each of the plurality of directions;
receiving (S302) a ground truth comprising a digital image of a stained sample, wherein the stained sample is formed by applying a staining agent to the unstained sample; and
training (S304) the machine learning model to construct a digital image (602) depicting an artificially stained sample using the received training set of digital images of the unstained sample and the received ground truth.

2. The method (30) according to claim 1, further comprising:
acquiring (S306) the training set of digital images of the unstained sample by:
illuminating (S308) the unstained sample from a plurality of directions, and
capturing (S310), for each direction of the plurality of directions, a digital image of the unstained sample.

3. The method (30) according to claim 1 or 2, wherein the training set of digital images is acquired using a microscope objective and an image sensor, and wherein at least one direction of the plurality of directions corresponds to an angle larger than a numerical aperture of the microscope objective.

4. The method (30) according to any one of claims 1-3, further comprising:
applying (S312) a staining agent to the unstained sample, thereby forming a stained sample; and
forming (S314) the ground truth comprising the digital image of the stained sample by:
acquiring (S316) a digital image of the stained sample.

5. The method (30) according to claim 4, wherein the act of acquiring (S316) the digital image of the stained sample comprises:
illuminating (S318) the stained sample simultaneously from a subset of the plurality of directions; and
capturing (S319) the digital image of the stained sample while the stained sample is illuminated simultaneously from the subset of the plurality of directions.

6. The method (30) according to any one of claims 1-3, further comprising:
receiving (S320) a reconstruction set of digital images of the stained sample, wherein the reconstruction set is acquired by illuminating the stained sample from a plurality of directions and capturing a digital image for each of the plurality of directions; and
reconstructing (S322), using a computational imaging technique and the received reconstruction set of digital images, the digital image of the stained sample.

7. The method according to claim 6, further comprising:
applying (S312) the staining agent to the unstained sample, thereby forming the stained sample; and
acquiring (S324) the reconstruction set of digital images of the stained sample by:
illuminating (S326) the stained sample from a plurality of directions, and
capturing (S328), for each direction of the plurality of directions, a digital image of the stained sample.

8. The method (30) according to claim 6 or 7, wherein the reconstruction set of digital images is acquired using a microscope objective and an image sensor, and wherein at least one direction of the plurality of directions corresponds to an angle larger than a numerical aperture of the microscope objective.

9. The method (30) according to any one of claims 1-8, wherein the ground truth comprises a digital image having a relatively higher resolution than a digital image of the training set of digital images.

10. A method (40) for constructing a digital image (602) depicting an artificially stained sample, the method (40) comprising:
receiving (S400) an input set of digital images of an unstained sample, wherein the input set of digital images is acquired by illuminating the unstained sample with white light from a plurality of directions and capturing a digital image for each of the plurality of directions;
constructing (S402) a digital image depicting an artificially stained sample by:
inputting (S404) the input set of digital images into a machine learning model being trained according to the method of any one of claims 1-9, and
receiving (S406), from the machine learning model, an output comprising the digital image (602) depicting an artificially stained sample.

11. The method (40) according to claim 10, wherein the input set of digital images of the unstained sample is acquired using a microscope objective and an image sensor, and wherein at least one direction of the plurality of directions corresponds to an angle larger than a numerical aperture of the microscope objective.

12. A device (10) for training a machine learning model to construct a digital image depicting an artificially stained sample, the device (10) comprising circuitry (100) configured to execute:
a first receiving function (1100) configured to receive a training set of digital images, wherein the training set of digital images is acquired by illuminating an unstained sample with white light from a plurality of directions and capturing a digital image of the unstained sample for each of the plurality of directions;
a second receiving function (1102) configured to receive a ground truth comprising a digital image of a stained sample, wherein the stained sample is formed by applying a staining agent to the unstained sample; and
a training function (1104) configured to train a machine learning model to construct a digital image depicting an artificially stained sample according to the method of any one of claims 1-9 using the received training set of digital images of the unstained sample and the received ground truth.

13. A microscope system (20) comprising:
an illumination system (260) configured to illuminate an unstained sample (292) from a plurality of directions (262), the illumination system (260) comprising a plurality of light sources, wherein each light source of the plurality of light sources is configured to emit white light;
an image sensor (270);
at least one microscope objective (280) arranged to image the unstained sample (292) onto the image sensor (270); and
circuitry (200) configured to execute:
an acquisition function (2100) configured to acquire an input set of digital images by being configured to:
control the illumination system (260) to illuminate the unstained sample (292) from each of the plurality of directions (262), and
control the image sensor (270) to capture a digital image for each of the plurality of directions (262), and
an image construction function (2102) configured to:
input the input set of digital images into a machine learning model being trained according to the method (30) of any one of claims 1-9, and
receive, from the machine learning model, an output comprising a digital image (602) depicting an artificially stained sample.

14. The microscope system (20) according to claim 13, wherein the illumination system (260) comprises a plurality of light sources arranged on a curved surface (264) being concave along at least one direction along the surface, and wherein each of the plurality of light sources (261) is configured to illuminate the unstained sample (292) from one of the plurality of directions.

15. The microscope system (20) according to claim 14, wherein the curved surface (264) is formed of facets (265).

16. The microscope system according to any one of claims 13-15,
wherein a numerical aperture of the at least one microscope objective (280) is 0.4 or lower.

17. A non-transitory computer-readable storage medium (50) comprising program code portions which, when executed on a device having processing capabilities, performs the method according to any one of claims 1-9 or the method according to any one of claims 10-11.

## Patentansprüche

1. Verfahren (30) zum Trainieren eines Modells maschinellen Lernens zum Erstellen eines digitalen Bildes (602), das eine künstlich gefärbte Probe darstellt, wobei das Verfahren (30) aufweist:
Empfangen (S300) eines Trainingssatzes digitaler Bilder einer ungefärbten Probe, wobei der Trainingssatz digitaler Bilder durch Beleuchten der ungefärbten Probe mit Weißlicht aus einer Mehrzahl von Richtungen und Aufnehmen eines digitalen Bildes für jede der Mehrzahl von Richtungen erfasst wird;
Empfangen (S302) einer Ground Truth, die ein digitales Bild einer gefärbten Probe aufweist, wobei die gefärbte Probe durch Anwenden eines Färbemittels auf die ungefärbte Probe gebildet wird; und
Trainieren (S304) des Modells maschinellen Lernens, um ein digitales Bild (602) zu erstellen, das eine künstlich gefärbte Probe darstellt, unter Verwendung des empfangenen Trainingssatzes digitaler Bilder der ungefärbten Probe und der empfangenen Ground Truth.

2. Verfahren (30) nach Anspruch 1, ferner aufweisend:
Erfassen (S306) des Trainingssatzes digitaler Bilder der ungefärbten Probe durch:
Beleuchten (S308) der ungefärbten Probe aus einer Mehrzahl von Richtungen und
Aufnehmen (S310) eines digitalen Bildes der ungefärbten Probe für jede der Mehrzahl von Richtungen.

3. Verfahren (30) nach Anspruch 1 oder 2, wobei der Trainingssatz digitaler Bilder unter Verwendung eines Mikroskopobjektivs und eines Bildsensors erfasst wird, und wobei mindestens eine Richtung der Mehrzahl von Richtungen einem Winkel entspricht, der größer ist als die numerische Apertur des Mikroskopobjektivs.

4. Verfahren (30) nach einem der Ansprüche 1 bis 3, ferner aufweisend:
Anwenden (S312) eines Färbemittels auf die ungefärbte Probe, wodurch eine gefärbte Probe gebildet wird; und
Bilden (S314) der Ground Truth, die das digitale Bild der gefärbten Probe aufweist, durch:
Erfassen (S316) eines digitalen Bildes der gefärbten Probe.

5. Verfahren (30) nach Anspruch 4, wobei der Schritt des Erfassens (S316) des digitalen Bildes der gefärbten Probe aufweist:
Beleuchten (S318) der gefärbten Probe gleichzeitig aus einer Teilmenge der Mehrzahl von Richtungen; und
Aufnehmen (S319) des digitalen Bildes der gefärbten Probe, während die gefärbte Probe gleichzeitig aus der Teilmenge der Mehrzahl von Richtungen beleuchtet wird.

6. Verfahren (30) nach einem der Ansprüche 1 bis 3, ferner aufweisend:
Empfangen (S320) eines Rekonstruktionssatzes digitaler Bilder der gefärbten Probe, wobei der Rekonstruktionssatz durch Beleuchten der gefärbten Probe aus einer Mehrzahl von Richtungen und Aufnehmen eines digitalen Bildes für jede der Mehrzahl von Richtungen erfasst werden kann; und
Rekonstruieren (S322) des digitalen Bildes der gefärbten Probe unter Verwendung einer computergestützten Bildgebungstechnik und des empfangenen Rekonstruktionssatzes digitaler Bilder.

7. Verfahren nach Anspruch 6, ferner aufweisend:
Anwenden (S312) des Färbemittels auf die ungefärbte Probe, wodurch die gefärbte Probe gebildet wird; und
Erfassen (S324) des Rekonstruktionssatzes digitaler Bilder der gefärbten Probe durch:
Beleuchten (S326) der gefärbten Probe aus einer Mehrzahl von Richtungen, und
Aufnehmen (S328) eines digitalen Bildes der gefärbten Probe für jede Richtung der Mehrzahl von Richtungen.

8. Verfahren (30) nach Anspruch 6 oder 7, wobei der Rekonstruktionssatz digitaler Bilder unter Verwendung eines Mikroskopobjektivs und eines Bildsensors erfasst wird, und wobei mindestens eine Richtung der Mehrzahl von Richtungen einem Winkel entspricht, der größer ist als die numerische Apertur des Mikroskopobjektivs.

9. Verfahren (30) nach einem der Ansprüche 1 bis 8, wobei die Ground Truth ein digitales Bild aufweist, das eine verhältnismäßig höhere Auflösung hat als ein digitales Bild des Trainingssatzes digitaler Bilder.

10. Verfahren (40) zum Erstellen eines digitalen Bildes (602), das eine künstlich gefärbte Probe darstellt, wobei das Verfahren (40) aufweist:
Empfangen (S400) eines Eingabesatzes digitaler Bilder einer ungefärbten Probe, wobei der Eingabesatz digitaler Bilder durch Beleuchten der ungefärbten Probe mit Weißlicht aus einer Mehrzahl von Richtungen und Aufnehmen eines digitalen Bildes für jede der Mehrzahl von Richtungen erfasst wird;
Erstellen (S402) eines digitalen Bildes, das eine künstlich gefärbte Probe darstellt, durch:
Eingeben (S404) des Eingabesatzes digitaler Bilder in ein gemäß dem Verfahren nach einem der Ansprüche 1 bis 9 trainiertes Modell maschinellen Lernens, und
Empfangen (S406) einer Ausgabe, die das digitale Bild (602) aufweist, das eine künstlich gefärbte Probe darstellt, von dem Modell maschinellen Lernens.

11. Verfahren (40) nach Anspruch 10, wobei der Eingabesatz digitaler Bilder der ungefärbten Probe unter Verwendung eines Mikroskopobjektivs und eines Bildsensors erfasst wird, und wobei mindestens eine Richtung der Mehrzahl von Richtungen einem Winkel entspricht, der größer ist als die numerische Apertur des Mikroskopobjektivs.

12. Vorrichtung (10) zum Trainieren eines Modells maschinellen Lernens zum Erstellen eines digitalen Bildes, das eine künstlich gefärbte Probe darstellt, wobei die Vorrichtung (10) eine Schaltungsanordnung (100) aufweist, die dazu ausgelegt ist, auszuführen:
eine erste Empfangsfunktion (1100), die dazu ausgelegt ist, einen Trainingssatz digitaler Bilder zu empfangen, wobei der Trainingssatz digitaler Bilder durch Beleuchten einer ungefärbten Probe mit Weißlicht aus einer Mehrzahl von Richtungen und Aufnehmen eines digitalen Bildes der ungefärbten Probe für jede der Mehrzahl von Richtungen erfasst wird;
eine zweite Empfangsfunktion (1102), die dazu ausgelegt ist, eine Ground Truth zu empfangen, die ein digitales Bild einer gefärbten Probe aufweist, wobei die gefärbte Probe durch Anwenden eines Färbemittels auf die ungefärbte Probe gebildet wird; und
eine Trainingsfunktion (1104), die dazu ausgelegt ist, ein Modell maschinellen Lernens zu trainieren, um ein digitales Bild zu erstellen, das eine künstlich gefärbte Probe darstellt, gemäß dem Verfahren nach einem der Ansprüche 1 bis 9 unter Verwendung des empfangenen Trainingssatzes digitaler Bilder der ungefärbten Probe und der empfangenen Ground Truth.

13. Mikroskopsystem (20), aufweisend:
ein Beleuchtungssystem (260), das dazu ausgelegt ist, eine ungefärbte Probe (292) aus einer Mehrzahl von Richtungen (262) zu beleuchten, wobei das Beleuchtungssystem (260) eine Mehrzahl von Lichtquellen aufweist, wobei jede Lichtquelle der Mehrzahl von Lichtquellen dazu ausgelegt ist, Weißlicht auszustrahlen;
einen Bildsensor (270);
mindestens ein Mikroskopobjektiv (280), das so angeordnet ist, dass es die ungefärbte Probe (292) auf den Bildsensor (270) abbildet; und
eine Schaltungsanordnung (200), die dazu ausgelegt ist, auszuführen:
eine Erfassungsfunktion (2100), die dazu ausgelegt ist,
einen Eingabesatz digitaler Bilder zu erfassen, indem sie ausgelegt ist zum:
Steuern des Beleuchtungssystems (260) so, dass es die ungefärbte Probe (292) aus jeder der Mehrzahl von Richtungen (262) beleuchtet, und
Steuern des Bildsensors (270) so, dass er für jede der Mehrzahl von Richtungen (262) ein digitales Bild aufnimmt, und
eine Bilderstellungsfunktion (2102), die ausgelegt ist zum:
Eingeben des Eingabesatzes digitaler Bilder in ein gemäß dem Verfahren (30) nach einem der Ansprüche 1 bis 9 trainiertes Modell maschinellen Lernens, und
Empfangen einer Ausgabe, die ein digitales Bild (602) aufweist, das eine künstlich gefärbte Probe darstellt, von dem Modell maschinellen Lernens.

14. Mikroskopsystem (20) nach Anspruch 13, wobei das Beleuchtungssystem (260) eine Mehrzahl von Lichtquellen aufweist, die auf einer gekrümmten Oberfläche (264) angeordnet sind, die entlang mindestens einer Richtung entlang der Oberfläche konkav ist, und wobei jede der Mehrzahl von Lichtquellen (261) dazu ausgelegt ist, die ungefärbte Probe (292) aus einer der Mehrzahl von Richtungen zu beleuchten.

15. Mikroskopsystem (20) nach Anspruch 14, wobei die gekrümmte Oberfläche (264) aus Facetten (265) gebildet ist.

16. Mikroskopsystem nach einem der Ansprüche 13 bis 15, wobei eine numerische Apertur des mindestens einen Mikroskopobjektivs (280) 0,4 oder weniger beträgt.

17. Ein nichtflüchtiges, computerlesbares Speichermedium (50), das Programmcodeteile aufweist, die, wenn sie auf einer Vorrichtung mit Verarbeitungsfähigkeiten ausgeführt werden, das Verfahren nach einem der Ansprüche 1 bis 9 oder das Verfahren nach einem der Ansprüche 10 bis 11 ausführen.

## Revendications

1. Procédé (30) destiné à entraîner un modèle d'apprentissage automatique à construire une image numérique (602) représentant un échantillon coloré artificiellement, le procédé (30) comprenant :
la réception (S300) d'un ensemble d'images numériques d'entraînement d'un échantillon non coloré, l'ensemble d'images numériques d'entraînement étant acquis par éclairage de l'échantillon non coloré avec de la lumière blanche provenant d'une pluralité de directions et capture d'une image numérique pour chaque direction de la pluralité de directions ;
la réception (S302) de données de terrain comprenant une image numérique d'un échantillon coloré, l'échantillon coloré étant formé par application d'un colorant à l'échantillon non coloré ; et
l'entraînement (S304) du modèle d'apprentissage automatique à construire une image numérique (602) représentant un échantillon coloré artificiellement au moyen de l'ensemble d'images numériques d'entraînement reçu de l'échantillon non coloré et des données de terrain reçues.

2. Procédé (30) selon la revendication 1, comprenant en outre :
l'acquisition (S306) de l'ensemble d'images numériques d'entraînement de l'échantillon non coloré par :
éclairage (S308) de l'échantillon non coloré depuis une pluralité de directions, et
capture (S310), pour chaque direction de la pluralité de directions, d'une image numérique de l'échantillon non coloré.

3. Procédé (30) selon la revendication 1 ou 2, dans lequel l'ensemble d'images numériques d'entraînement est acquis au moyen d'un objectif de microscope et d'un capteur d'images, et dans lequel au moins une direction de la pluralité de directions correspond à un angle plus grand qu'une ouverture numérique de l'objectif de microscope.

4. Procédé (30) selon l'une quelconque des revendications 1 à 3, comprenant en outre :
l'application (S312) d'un colorant sur l'échantillon non coloré, ce qui permet de former un échantillon coloré ; et
la formation (S314) des données de terrain comprenant l'image numérique de l'échantillon coloré par :
acquisition (S316) d'une image numérique de l'échantillon coloré.

5. Procédé (30) selon la revendication 4, dans lequel l'opération d'acquisition (S316) de l'image numérique de l'échantillon coloré comprend :
l'éclairage simultané (S318) de l'échantillon coloré depuis un sous-ensemble de la pluralité de directions ; et
la capture (S319) de l'image numérique de l'échantillon coloré pendant que l'échantillon coloré est éclairé simultanément depuis le sous-ensemble de la pluralité de directions.

6. Procédé (30) selon l'une quelconque des revendications 1 à 3, comprenant en outre :
la réception (S320) d'un ensemble d'images numériques de reconstruction de l'échantillon coloré, l'ensemble de reconstruction étant acquis par éclairage de l'échantillon coloré depuis une pluralité de directions et capture d'une image numérique pour chaque direction de la pluralité de directions ; et
la reconstruction (S322), au moyen d'une technique d'imagerie numérique et de l'ensemble d'images numériques de reconstruction reçu, de l'image numérique de l'échantillon coloré.

7. Procédé selon la revendication 6, comprenant en outre :
l'application (S312) du colorant à l'échantillon non coloré, ce qui permet de former l'échantillon coloré ; et
l'acquisition (S324) de l'ensemble d'images numériques de reconstruction de l'échantillon coloré par :
éclairage (S326) de l'échantillon coloré depuis une pluralité de directions, et
capture (S328), pour chaque direction de la pluralité de directions, d'une image numérique de l'échantillon coloré.

8. Procédé (30) selon la revendication 6 ou 7, dans lequel l'ensemble d'images numériques de reconstruction est acquis au moyen d'un objectif de microscope et d'un capteur d'images, et dans lequel au moins une direction de la pluralité de directions correspond à un angle plus grand qu'une ouverture numérique de l'objectif de microscope.

9. Procédé (30) selon l'une quelconque des revendications 1 à 8, dans lequel les données de terrain comprennent une image numérique ayant une résolution relativement plus élevée que celle d'une image numérique de l'ensemble d'images numériques d'entraînement.

10. Procédé (40) destiné à construire une image numérique (602) représentant un échantillon coloré artificiellement, le procédé (40) comprenant :
la réception (S400) d'un ensemble d'images numériques d'entrée d'un échantillon non coloré, l'ensemble d'images numériques d'entrée étant acquis par éclairage de l'échantillon non coloré avec de la lumière blanche provenant d'une pluralité de directions et capture d'une image numérique pour chaque direction de la pluralité de directions ;
la construction (S402) d'une image numérique représentant un échantillon coloré artificiellement par :
introduction (S404) de l'ensemble d'images numériques d'entrée dans un modèle d'apprentissage automatique entraîné selon le procédé de l'une quelconque des revendications 1 à 9, et
réception (S406), du modèle d'apprentissage automatique, d'un résultat comprenant l'image numérique (602) représentant un échantillon coloré artificiellement.

11. Procédé (40) selon la revendication 10, dans lequel l'ensemble d'images numériques d'entrée de l'échantillon non coloré est acquis au moyen d'un objectif de microscope et d'un capteur d'images, et dans lequel au moins une direction de la pluralité de directions correspond à un angle plus grand qu'une ouverture numérique de l'objectif de microscope.

12. Dispositif (10) destiné à entraîner un modèle d'apprentissage automatique à construire une image numérique représentant un échantillon coloré artificiellement, le dispositif (10) comprenant des circuits (100) conçus pour exécuter :
une première fonction de réception (1100) conçue pour recevoir un ensemble d'images numériques d'entraînement, l'ensemble d'images numériques d'entraînement étant acquis par éclairage d'un échantillon non coloré avec de la lumière blanche provenant d'une pluralité de directions et capture d'une image numérique de l'échantillon non coloré pour chaque direction de la pluralité de directions ;
une deuxième fonction de réception (1102) conçue pour recevoir des données de terrain comprenant une image numérique d'un échantillon coloré, l'échantillon coloré étant formé par application d'un colorant à l'échantillon non coloré ; et
une fonction d'entraînement (1104) conçue pour entraîner un modèle d'apprentissage automatique à construire une image numérique représentant un échantillon coloré artificiellement selon le procédé de l'une quelconque des revendications 1-9 au moyen de l'ensemble d'images numériques d'entraînement reçu de l'échantillon non coloré et des données de terrain reçues.

13. Système de microscope (20) comprenant :
un système d'éclairage (260) conçu pour éclairer un échantillon non coloré (292) depuis une pluralité de directions (262), le système d'éclairage (260) comprenant une pluralité de sources de lumière, chaque source de lumière de la pluralité de sources de lumière étant conçue pour émettre de la lumière blanche ;
un capteur d'images (270) ;
au moins un objectif de microscope (280) agencé pour former l'image de l'échantillon non coloré (292) sur le capteur d'images (270) ; et
des circuits (200) conçus pour exécuter :
une fonction d'acquisition (2100) conçue pour acquérir un ensemble d'images numériques d'entrée en étant conçue pour :
commander le système d'éclairage (260) pour qu'il éclaire l'échantillon non coloré (292) depuis chaque direction de la pluralité de directions (262), et
commander le capteur d'images (270) pour qu'il capture une image numérique pour chaque direction de la pluralité de directions (262), et
une fonction de construction d'image (2102) conçue pour :
introduire l'ensemble d'images numériques d'entrée dans un modèle d'apprentissage automatique entraîné selon le procédé (30) de l'une quelconque des revendications 1 à 9, et
recevoir, du modèle d'apprentissage automatique, un résultat comprenant une image numérique (602) représentant un échantillon coloré artificiellement.

14. Système de microscope (20) selon la revendication 13, dans lequel le système d'éclairage (260) comprend une pluralité de sources de lumière disposées sur une surface incurvée (264) qui est concave le long d'au moins une direction le long de la surface, et dans lequel chaque source de la pluralité de sources de lumière (261) est conçue pour éclairer l'échantillon non coloré (292) depuis une direction de la pluralité de directions.

15. Système de microscope (20) selon la revendication 14, dans lequel la surface incurvée (264) est constituée de facettes (265).

16. Système de microscope selon l'une quelconque des revendications 13 à 15, une ouverture numérique de l'au moins un objectif de microscope (280) étant de 0,4 ou moins.

17. Support de stockage non transitoire lisible par ordinateur (50) comprenant des parties de code de programme qui, lors de leur exécution sur un dispositif possédant des capacités de traitement, effectuent le procédé selon l'une quelconque des revendications 1 à 9 ou le procédé selon l'une quelconque des revendications 10 et 11.
